(19) Europäisches Patentamt
European Patent Office
Office européen des brevets

(11) Publication number: 0 220 219 B1

(12) # EUROPEAN PATENT SPECIFICATION

(45) Date of publication of the patent specification: **02.08.89**

(51) Int. Cl.⁴: **H 01 B 3/02**, H 01 B 3/08, H 01 B 3/48

(21) Application number: **86902395.2**

(22) Date of filling: **02.04.86**

(86) International application number: **PCT/EP 86/00202**

(87) International publication number: **WO 86/05918 (09.10.86 Gazette 86/22)**

(54) **INSULATING MATERIAL, PREPARATION METHOD AND USE THEREOF.**

(30) Priority: **03.04.85 YU 55385/85**

(43) Date of publication of application: **06.05.87 Bulletin 87/19**

(45) Publication of the grant of the patent: **02.08.89 Bulletin 89/31**

(84) Designated Contracting States: **AT BE CH DE FR GB IT LI LU NL SE**

(56) References cited:
**DE-A-914 265**
**US-A-3 968 072**

(73) Proprietor: **QUILL- QUARZ GMBH, Schleissheimer Strasse 266, D-8000 München 22 (DE)**

(72) Inventor: **Vidosava, Popovic, Heroja Maricica 107/1, 3600 Kraljevo (YU)**

(74) Representative: **EGLI- EUROPEAN PATENT ATTORNEYS, Widenmayerstrasse 5, D-8000 München 22 (DE)**

**EP 0 220 219 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

## Description

The present invention relates to a new material of thermal and electrical insulating and of sound and vibrations damping propertie of a high mechanical strength and a permanent water and $CO_2$ resistance, based on Ca-hydrosilicate, to a new method for the manufacture thereof and to the use of the new material in technical fields requiring very good universal insulating properties and simultaneously an adequate mechanical strength and high thermal stability.

Thermoinsulating materials on the basis of Ca-hydrosilicates which may contain fibres are known. They are, however, not satisfactory e.g. in thermoaggregates or other uses in severe conditions as they either lack mechanical strength - especially when exposed to high temperatures - or insulating properties or both. As their thermal stability, water resistance etc. have been inferior, their working life was rather short. Ca-hydrosilicates available on the market exhibit a compressive resistance of 49 $N/cm^2$ after the exposition to 1273.15 K.

Accordingly, their field of application is specific and narrow and the problem of finding a universal material combining insulating properties as well as mechanical strength and thermal stability has not yet been solved in prior art.

It has now been found that a material on the basis of Ca-hydrosilicate, predominantly comprising 1,1 mm tobermorite of fibrous structure, wherein there is optionally incorporated a miner quantity of inorganic and/or organic fibres, exhibits excellent thermal and electrical insulating and sound and vibrations damping properties, a permanent $CO_2$ and water resistance and simultaneously a high mechanical strength, even at severe working conditions. The material possesses the best properties when it comprises at least 80 weight % of 1,1 nm tobermorite of fibrous, well-crystallized structure.

Said material of unobvious characteristics is the first object of the present invention.

A further object of the present invention is a new method for the manufacture of a Ca-hydrosilicate material, predominantly comprising 1,1 nm tobermorite of fibrous structure, based on the following equation:

$$5\,Ca(OH)_2 + 6\,SiO_2 + 5.5\,H_2O + q(J) \rightarrow 5\,CaO \times 6\,SiO_2 \times 10.5\,H_2O$$

by means of a "wet" method starting from solutions and suspensions respectively, whereas the hitherto known syntheses have been performed in a moist moulded or otherwise formed mass.

The present inventive method is specifically performed in the following manner: Hydrated lime and pulverized quartz of a particle size of maximum 93 µm and a $SiO_2$ content of at least 80 weight % in a ratio of hydrated lime: $SiO_2$ 0.73 to 0.76 are successively added to an aqueous solution containing 0.3 to 1.5 mass % of an alkali salt of carboxymethylcellulose, whereupon there are added to the suspension 5 to 8 weight % - calculated on the solid phase mass - of inorganic or organic fibres of a max. length of about 10 mm so that the ratio of liquid phases solid phases in the suspension lies within the range of 4.5 to 5.5, subsequently said suspension is filled into moulds, which are subjected to the action of water vapour at a pressure of 7.0 to 11.0 bar during 12 to 16 hours, and finally the product is removed from the moulds and dried at a temperature of maximum 493 K.

The alkali salt of carboxymethylcellulose is preferably sodium carboxymethylcellulose. Inorganic fibres are particularly asbestos fibres of a length of about 10 mm. Organic fibres are preferably flax, hemp or jute fibres of a length of about 10 mm.

It should be noted that said fibres are not added with the aim of reinforcing the structure of the Ca-hydrosilicate but as additives inducing the crystallization to proceed towards the desired formation of 1,1 nm tobermorite of fibrous, well-crystallized structure. Without restricting herself to any theory, the inventor believes that they act as retardation agents during the synthesis, thus enabling the selective crystallization into 1,1 nm tobermorite to proceed. The high content of well-formed 1,1 nm tobermorite was confirmed by X-ray difractographic analysis of the product.

After the completed formation of the 1,1 nm tobermorite crystals the presence of fibres is not critical any more and they may be destroyed during a subsequent heating of the material to high temperatures.

The behaviour of the new material is obviously characteristic of a substantially homogeneous structural entity, whereas the prior art products were degraded into their individual ingredients when subjected to increased temperatures.

Owing to these novel features of its structure and texture, the claimed material is universally applicable in static and dynamic, thermal and other aggregates.

A further object of the present invention is the use of the material, based on Ca-hydrosilicate, predominantly comprising 1,1 nm tobermorite of fibrous structure, as thermal and electrical insulating, sound and vibrations damping materials of simultaneous high mechanical strength and and a permanent water and $CO_2$ resistance, as may be envisaged by any-person skilled in the art.

The present invention is illustrated by the following Examples, which are not to be construed as limiting in any way.

### Example 1

Hydrated lime (330 kg; CaO content 72 weight %) was added to a premix consisting of water (1.5 $m^3$) and sodium carboxymethylcellulose (3 kg), whereupon there was added pulverized

quartz (309 kg; $SiO_2$ content 97.5 weight %; particle size < 93 μm). The obtained mixture was added to a premix of chrysotile asbestos fibres (38 kg; length approximatively mm) in water (1,23 $m^3$). All components were thoroughly mixed by stirring and dosed into moulds (inside dimensions 1.2 m x 0.6 m x 0.3 m). The filled moulds were subjected to a hydrothermal treatment in an autoclave during 14 hours at a pressure of 9.18 to 10.2 bar. After the completed hydrothermal treatment white cloured blocks were removed from the block, dried and tested.

**Example 2**

Hydrated lime (465.65 kg; CaO content 72 mass 4) was added to a solution of sodium carboxymethylcellulose (3.8 kg) in water (2000 l). Thereupon there was added pulverized quartz (463.5 kg; $SiO_2$ content 97.5 weight %; particle size < 93 μm). The components were stirred and the thoroughly mixed suspension was transferred into a second mixer containing water (2200 l) and fibres (19 kg of flax fibres, length 10 - 12 mm, and 48.5 kg of chrysotile asbestos fibres, length approximatively 10 mm). All components were thoroughly mixed and the obtained pulp-like suspension was filled into moulds as defined in Example 1.

The filled moulds were subjected to a hydrothermal treatment in an autoclave in accordance with the following temperature gradient procedure:

1. preheating: 2.5 hours (up to 9.5 bar)
2. Isobaric period: 11 hours at 9.5 - 10 bar
3. cooling: 3 hours

The blocks which were removed from the moulds subsequently to the hydrothermal treatment had a total volume of 3.65 $m^3$ and a free water content of 79 weight %. There were dried for about 20 hours at approximatively 448 K.

**Report of results**

Properties of blocks produced in accordance with Examples 1 and 2. Thermal stability at temperatures exceeding 1573 K. Bulk density: 220 - 280 kg/$m^3$

Compressive resistance: 1470900 - 1961200 N/$m^2$

Flexural bending strength: 980600 - 1000000 N/$m^2$

Total porosity: 75 - 85 %

Linear shrinkage after 24 hours of subjection to heat: 1.8 - 2 %

at a mean temperature of 1273: 15 K

Apparent thermal conductivity at mean temperatures: 0,06978 - 0,1W/mK,

| | |
|---|---|
| 473.15 K | 0.06978 W/mK |
| 573.15 K | 0.0872 W/mK |
| 673.15 K | 0.09769 W/mK |

The above tests were performed in accordance with:

ASTM C 165 (compressive properties)
ASTM C 203 (flexural strength)
ASTM C 303 (density)
ASTM C 356 (linear shrinkage)
ASTM C 518 (thermal transmission)
ASTM (air and Hg) methods for assaying porosity in refractory material (porosity)

Standard test JUS.U.J. 1.040, point 7 (burning test):

the tested samples were not combustible.

Standard test JUS.U.J. 1.060, point 7 (inflammability test):

the tested samples were not inflammable and the material was classified into class I.

Evaluation according to the Regulations on Technical Measures and Conditions for the Acoustical Insulation of Brickwork (Official Gazette of Yugoslavia, No. 35/70): The acoustical insulation capacity of the tested wall boards of a thickness of 5 cm was 28 decibel. Mean deviation: - decibel. Mean value of sound transmittance reduction: 32 decibel.

The vibration damping property is a characterizing feature of the present inventive material, which is a novel advantage of Ca-hydrosilicate-based thermoinsulating materials.

The new inventive material is resistant to humidity and absorbs moisture until an air dry state is attained. It is also permanently stable in water. It does not leak water prior to complete saturation. The absorbable quantity of water might five times exceed its original weight. Thus the material might be used in certain cases for hydroinsulating purposes. It is alsot frost-resistant, even in humid state.

After re-drying the material exhibits its original characteristics. The diffusion resistance factor (the water vapour transmission value of a layer of the inventive material divided by the water vapour transmission value of a layer of air of equal thickness) was determined as $\mu = 17.8$.

The new material is resistant to $CO_2$ gas and pests such as rodents and insects.

The claimed new material has a white - even brilliant white - and very pleasant colour, which is also acceptable in exacting fields of application (architecture, food processing etc.).

Workmanship: It may be worked e.g. by means of wood - working tools. The forming may be completely performed during the manufacture of the material, especially if there are required forms not attainable by means of cutting and sawing or if there are preferred solely or predominantly original, non-machined surfaces of the final product.

The surfaces of the formed pieces may be finished, e.g. painted in any conventional manner.

It may be reasonably concluded that the new inventive material has a very broad applicability in various technical fields.

Therefore there are claimed as a further object of the present invention all articles, elements or pieces, formed from the new, inventive material which is defined in the introductory part of this specification. They may be used in any technical field wherein overall insulating properties and simultaneously a good stability at high temperatures as well as a good pressure-, fire-, vibration-, water vapour-, $CO_2$- etc. resistance is required.

Without limiting the scope of possible modes of application, which a worker skilled in the art might find without undue inventive efforts, there are contemplated the following technical fields by way of example: refractory materials, electric and thermal insulation power station equipment, building constructions, especially for unfavourable climates, furniture, protection of metallic constructions, cisterns, refrigerators, condensors, e.g. in chemical industry, aircraft and shipbuilding elements etc. An interesting use to be envisaged might be the use as catalyst carrier.

## Claims

1. A material of thermal and electrical insulating and of sound and vibrations damping properties, of a high mechanical strength and a permanent water and $CO_2$ resistance, based on Ca-hydrosilicate, characterized in that the Ca-hydrosilicate comprises predominantly preferably at least 80 weight % 1,1 nm tobermorite of fibrous well-crystallized structure wherein there is optionally incorporated a minor quantity of inorganic and/or organic fibres.

2. A material as claimed in claim 1, characterized in that it shows the following characteristics (ASTM):

Bulk density: 220 - 280 kg/m$^3$,

Apparent thermal conductivity: 0.06978 - 0.1 W/mK,

Compressive resistance: 1470900 - 1961200 N/m$^2$,

Linear shrinkage after 24 hours of subjection to heat: max 2 % at a mean temperature of 1273.15 K,

Thermal stability at temperatures exceeding 1573 K,

Bending strength: up to about 980000 N/m$^2$.

3. A material as claimed in claim 1, wherein inorganic fibres are asbestos fibres of a length of about 10 mm.

4. A material as claimed in claim 1, wherein organic fibres are flax, hemp or jute fibres of a length of about 10 mm.

5. A method for the manufacture of a material of thermal and electrical insulating and of sound and vibrations damping properties of a high mechanical strength and a permanent water and $CO_2$ resistance, based on Ca-hydrosilicate, comprising predominantly 1,1 nm tobermorite of fibrous, well-crystallized structure, characterized in that hydrated lime and pulverized quartz of a particle size of max. 93 µm and a $SiO_2$ content of at least 80 weight % in a ratio of hydrated lime: $SiO_2$= 0.73 to 0,76 are successively added to an aqueous solution containing 0.3 to 1.5 weight % of an alkali salt of carboxymethylcellulose, whereupon there are added to the suspension 5 to 8 weight % - calculated on the solid phase mass - of inorganic or organic fibres of a max. length of about 10 mm, so that the ratio of liquid phases/solid phases in the suspension lies within the range of 4.5 to 5.5, subsequently said suspension is filled into moulds, which are subjected to the action of water vapour at a pressure of 7.0 to 11.0 bar during 12 to 16 hours, and finally the product is removed from the moulds and dried at a temperature of max. 493 K.

6. A method as claimed in claim 5, wherein inorganic fibres are asbestos fibres of a length of about 10 mm.

7. A method as claimed in claim 5, wherein organic fibres are flax, hemp or jute fibres of a length of about 10 mm.

8. Products, formed from the material as claimed in any of the claims 1 to 4.

9. Use of the products as claimed in claim 8, as e.g. refractory materials, electric and thermal insulation, power station equipment, building construction elements, furniture, metallic construction protection, cisterns, refrigerators, condensors in chemical industry, aircraft and shipbuilding elements, catalyst carriers, and analogous products requiring very good overall insulating properties and adequate mechanical strength.

## Patentansprüche

1. Material mit thermisch und elektrisch isolierenden und schall- und vibrationsdämpfenden Eigenschaften, mit hoher mechanischer Festigkeit und einer permanenten Widerstandsfähigkeit gegenüber Wasser und $CO_2$ auf der Basis von Calciumhydrosilicat, dadurch gekennzeichnet, daß das Calciumhydrosilicat überwiegend vorzugsweise mindestens 80 Gew.-% 1,1 nm Tobermorit von fasriger, gut kristallisierter Struktur enthält, worin gegebenenfalls eine geringe Menge anorganischer und/oder organischer Fasernenthalten sind.

2. Material nach Anspruch 1, dadurch gekennzeichnet, daß es die folgenden Charakteristika (ASTM) zeigt:

Rohdichte: 220 - 280 kg/m$^3$

Scheinbare thermische Leitfähigkeit: 0,06978 - 0,1 W/mK

Druckfestigkeit: 1470900 - 1961200 N/m$^2$

Lineare Schrumpfung nach 24 stündiger Einwirkung von Hitze: maximal 2 % bei einer mittleren Temperatur von 1273,15 K

Thermische Stabilität bei Temperaturen

oberhalb von 1573 K

Biegefestigkeit: bis zu ca. 980000 N/$m^2$

3. Material nach Anspruch 1, dadurch gekennzeichnet, daß die anorganischen Fasern Asbestfasern einer Länge von ca. 10 mm sind.

4. Material nach Anspruch 1, dadurch gekennzeichnet, daß die organischen Fasern Flachs-, Hanf- oder Jutefasern einer Länge von ca. 10 mm sind.

5. Verfahren zur Herstellung eines Materials mit thermisch und elektrisch isolierenden und mit schall- und vibrationsdämpfenden Eigenschaften, mit hoher mechanischer Festigkeit und einer permanenten Widerstandsfähigkeit gegenüber Wasser und $CO_2$ auf der Basis von Calcium-hydrosilicat, das überwiegend 1,1 nm Tobermorit einer fasrigen, gut kristallisierten Struktur enthält, dadurch gekennzeichnet, daß gelöschter Kalk und pulverisierter Quarz einer Teilchengröße von maximal 93 µm und einem $SiO_2$ - Gehalt von mindestens 80 Gew.-% in einem Verhältnis von gelöschtem Kalk: $SiO_2$ = 0,73: 0,76 nacheinander einer wäßrigen Lösung zugefügt werden, die 0,3 bis 1,5 Gew.-% eines Alkalisalzes von Carboxymethylcellulose enthält, worauf dann zu der Suspension 5 bis 8 Gew.-% - bezogen auf die Masse der festen Phase - anorganische oder organische Fasern einer maximalen Länge von ca. 10 mm hinzugefügt werden, so daß das Verhältnis von flüssigen Phasen/Festphasen in der Suspension im Bereich von 4,5 bis 5,5 liegt, die Suspension dann in Formen gefüllt wird, die der Einwirkung von Wasserdampf bei einem Druck von 7,0 bis 11,0 bar während 12 bis 16 Stunden unterworfen werden, und das Produkt schließlich aus den Formen entfernt und bei einer Temperatur von maximal 493 K getrocknet wird.

6. Verfahren nach Anspruch 5, dadurch gekennzeichnet, daß die anorganischen Fasern Asbestfasern einer Länge von ca. 10 mm sind.

7. Verfahren nach Anspruch 5, dadurch gekennzeichnet, daß die organischen Fasern Flachs-, Hanf- oder Jutefasern einer Länge von ca. 10 mm sind.

8. Erzeugnisse, hergestellt aus dem in einem der Ansprüche 1 bis 4 beanspruchten Material.

9. Verwendung der Erzeugnisse nach Anspruch 8 als z. B. feuerfeste Materialien, elektrische und thermische Isolierung, Kraftwerksausstattung, Hochbauelemente, Ausrüstungen, Metallkonstruktionsschutz, Zisternen, Kühlräume, Kondensatoren in der chemischen Industrie, als Elemente in Flugzeug - und Schiffsbau, Katalysatorträger, und analoge Produkte, die sehr gute Gesamtisolierungseigenschaften und eine ausreichende mechanische Festigkeit erfordern.

**Revendications**

1. Matériau à propriétés d'isolation thermique et électrique et d'insonorisation et amortissement des vibrations, à résistance mécanique élevée et à résistance permanente à l'eau et au $CO_2$, à base d'hydrosilicate de Ca, caractérisé en ce que l'hydrosilicate de Ca comprend de préférence, de manière prépondérante, au moins 80 % en poids d'une tobermorite de longueur, 1,1 nm à structure fibreuse bien cristallisée, dans laquelle est facultativement incorporée une quantité secondaire de fibres minérales et/ou organiques.

2. Matériau suivant la revendication 1, caractérisé en ce qu'il possède les caractéristiques (ASTM) suivantes:

densité apparente: 220 - 280 kg/$m^3$,

conductibilité thermique apparente: 0,06978 - 0,1 W/mK,

résistance à la compression: 1470900 - 1961200 N/$m^2$,

retrait linéaire après 24 heures d'exposition à la chaleur à une température moyenne de 1273,15° K: max. 2 %,

résistance à la flexion: jusqu'à environ 980000 N/$m^2$.

3. Matériau suivant la revendication 1, dans lequel les fibres minérales sont des fibres d'amiante d'une longueur d'environ 10 mm.

4. Matériau suivant la revendication 1, dans lequel les fibres organiques sont des fibres de lin, de chanvre ou de jute d'une longueur d'environ 10 mm.

5. Procédé de préparation d'un matériau à propriétés d'isolation thermique et électrique et d'insonorisation et amortissement des vibrations, à résistance mécanique élevée et à résistance permanente à l' eau et au $CO_2$, à base d'hydrosilicate de Ca, comprenant de manière prépondérante au moins 80 % en poids d'une tobermorite de longueur, 1,1 nm à structure fibreuse bien cristallisée, caractérisé en ce qu'on ajoute successivement de la chaux hydratée et du quartz broyé, d'une granulométrie d'au maximum 93 µm et à teneur en $SiO_2$ d'au moins 80 % en poids, dans un rapport chaux hydratée/$SiO_2$ = 0,73 à 0,76, à une solution aqueuse contenant de 0,3 à 1,5 % en poids d'un sel alcalin de carboxyméthylcellulose, à la suite de quoi on ajoute à la suspension de 5 à 8 % en poids - ramené à la masse des phases solides - de fibres minérales ou organiques d'une longueur maximale d'environ 10 mm, de façon que le rapport phases liquides/phases solides dans la suspension se trouve dans la gamme de valeurs de 4,5 à 5,5, on remplit ensuite, à l'aide de cette suspension, des moules qu'on soumet à l'action de vapeur d'eau sous une pression de 7,0 à 11,0 bars pendant 12 à 16 heures et on extrait enfin des moules le produit pour le faire sécher à une température d'au maximum 493° K.

6. Procédé suivant la revendication 5, dans lequel les fibres minérales sont des fibres d'amiante d'une longueur d'environ 10 mm.

7. Procédé suivat la revendication 5, dans lequel les fibres 8 organiques sont des fibres de lin, de chanvre ou de jute d'une longueur d'environ 10 mm.

8. Produits réalisés à partir du matériau suivant l'une quelconque des revendications 1 à 4.

9. Utilisation des produits suivant la revendication 8, notamment en tant que matériaux réfractaires, isolation électrique et thermique, équipement d'usine électrique, éléments de construction de bâtiments, mobilier, protection de constructions métalliques, citernes, réfrigérateurs, condenseurs dans l'industrie chimique, éléments de construction aéronautique et navale, substrats pour catalyseurs, et produits analogues exigeant de très bonnes propriétés générales d'isolation et une résistance mécanique appropriée.